# EUROPÄISCHE PATENTSCHRIFT

(11) **EP 0 986 801 B1**
(45) Veröffentlichungstag und Bekanntmachung des Hinweises auf die Patenterteilung: **12.09.2001**
(21) Anmeldenummer: 98934862.8
(22) Anmeldetag: 05.06.1998
(51) Int. Cl.: G08C 19/26, G08C 19/28, G01K 1/02, G01D 5/244

(54) **STEUERUNGS- UND/ODER ÜBERWACHUNGSGERÄT**
CONTROL AND/OR MONITORING APPARATUS
APPAREIL DE CONTROLE ET/OU DE SURVEILLANCE

(30) Priorität: 06.06.1997 DE 19723957
(43) Veröffentlichungstag der Anmeldung: 22.03.2000
(73) Patentinhaber: SIEMENS AKTIENGESELLSCHAFT, 80333 München (DE)
(72) Erfinder: KAMMLER, Heiko, D-92284 Poppenricht (DE)
(86) Internationale Anmeldenummer: DE9801534
(87) Internationale Veröffentlichungsnummer: WO9855978

(56) Entgegenhaltungen:
- EP-A- 0 575 979
- EP-A- 0 731 347
- DE-A- 2 626 966
- DE-A- 3 128 706
- DE-A- 3 824 671
- DE-A- 4 210 189
- FR-A- 2 588 965
- US-A- 4 388 822
- US-A- 4 651 151
- US-A- 4 872 007
- US-A- 5 006 841
- US-A- 5 200 743

## Beschreibung

Die vorliegende Erfindung betrifft ein elektrisches Gerät zur Auswertung und Verarbeitung eines Meßwertes, der von einem Meßwertaufnehmer zur Aufname mindestens eines analogen Meßwertes geliefert wird.

Der Meßwertaufnehmer ist dabei insbesondere ein dezentraler Meßwertaufnehmer, z.B. ein Näherungssensor oder ein Temperatursensor, das zweite elektrische Gerät ist z.B. eine speicherprogrammierbare Steuerung, die Zentraleinheit einer speicherprogrammierbaren Steuerung oder ein Prozeßrechner.

Die Erfindung betrifft also ein Steuerungs- und/oder Überwachungsgerät, das mit einem dezentralen elektrischen Gerät zur Aufnahme mindestens eines analogen Meßwertes kommunikativ verbindbar ist, wobei der mittels des elektrischen Gerätes aufnehmbare Meßwert an das Steuerungs- und/oder Überwachungsgerät übermittelbar ist. Ein derartiges Steuerungs- und/oder Überwachungsgerät ist beispielsweise in der DE-A-3 128 706 beschrieben.

Im Stand der Technik sind sowohl Meßwertaufnehmer, die hier exemplarisch für das erste, den Meßwert aufnehmende elektrische Gerät stehen können, als auch speicherprogrammierbare Steuerungen, die hier exemplarisch für das zweite, den Meßwert auswertende oder verarbeitende elektrische Gerät stehen können, bekannt.

Der Meßwertaufnehmer weist einen Sensor zur Aufnahme des eigentlichen Meßwertes auf, der eine dem Meßwert proportionale elektrische Größe, üblicherweise einen Strom- oder einen Spannungswert liefert. Diese elektrische Größe wird mittels eines für den Meßwertaufnehmer vorgesehenen Mikroprozessors oder ASICs, z.B. durch ein digitales Filterprogramm, bearbeitet.

Aus der US-A-5 006 841 ist beispielsweise ein Meßwertaufnehmer bekannt, der eine Eingangs- und eine Ausgangskonvectierungseinrichtung sowie eine Übertragungseinrichtung aufweist.

Die Aufgabe der Erfindung besteht darin, ein Steuerungs- und/oder Überwachungsgerät anzugeben, dem von einem Meßwertaufnehmer eine einem Meßwert proportionale Frequenz oder Signalfolge geliefert wird, die an einen zum Zählen elektrischer Impulse geeigneten Eingang des Steuerungs- und/oder Überwachungsgerätes übertragen wird, das eine effiziente Auswertung des empfangenen Meßwertes ermöglicht.

Diese Aufgabe wird mit einem Steuerungs- und/oder Überwachungsgerät, wie es in Anspruch 1 angegeben ist, gelöst.

Darüber hinaus bildet die Kombination aus Meßwertaufnehmer und dem den Meßwert auswertenden und verarbeitenden Steuerungs- und/oder Überwachungsgerät eine Vorrichtung zum Übertragen analoger Meßwerte, die derart ausgestaltet ist, daß der Meßwertaufnehmer einen Konvertierer zum Konvertieren des Meßwertes in eine dem Meßwert proportionale Frequenz oder Signalfolge aufweist, und daß das Steuerungs- und/oder Überwachungsgerät einen Zähler zum Zählen elektrischer Impulse aufweist, wobei aus der Anzahl der gezählten Impulse der Meßwert ermittelbar ist.

Wenn eine derartige Vorrichtung zum Übertragen analoger Meßwerte derart ausgestaltet ist, daß die Übertragung während definierter, insbesondere vorgebbarer Zeitabschnitte erfolgt, ist es in vorteilhafter Weise möglich, z.B. mehr als einen Meßwertaufnehmer mit einem Zähler des Steuerungs- und/oder Überwachungsgerätes zu verbinden, denn dann ist es möglich, daß jeder Meßwertaufnehmer während eines eindeutigen überschneidungsfreien Zeitintervalls seinen Meßwert an den Zähler liefert, so daß im Steuerungs- und/oder Überwachungsgerät der jeweils empfangene Meßwert eindeutig zuordenbar ist.

Weiterhin ist es bei der Übertragung während definierter, insbesondere vorgebbarer Zeitabschnitte auch möglich, den Meßwert durch die damit implizit gewählte Abtastrate zu glätten und damit eine Vorfilterung unerwünschter Schwankungen zu bewirken.

Wenn die Vorrichtung zum Übertragen analoger Meßwerte derart weitergebildet ist, daß für beide Geräte eine Torzeit, während derer die Übertragung erfolgt, vorwählbar ist und daß der Meßwertaufnehmer eine Ausgabeeinheit zum Ausgeben einer dem Meßwert proportionalen und auf die Torzeit bezogenen Frequenz- oder Impulsfolge aufweist und daß das Steuerungs- und/ oder Überwachungsgerät eine Auswerteeinheit zum Bestimmen des Meßwertes aus der Anzahl der während der Torzeit gezählten Impulse aufweist, ist es vorteilhafterweise möglich, die übertragene Frequenz- oder Impulsfolge auf eine geeignete Zeitbasis zu beziehen.

Die Leistungsfähigkeit der Zähler für die genannten Steuerungs- oder Überwachungsgeräte reicht vom Zählen von Impulsen im Sekundentakt bis zum Zählen von Impulsen im Mikro- oder Nanosekundentakt. Je größer das jeweilige Auflösungsvermögen des Zählers ist, desto aufwendiger und kostenintensiver ist der jeweilige Zähler.

Im Falle einer zu übermittelnden Frequenz von 5 kHz werden während der damit implizit vorgegebenen Zeitbasis von 1 Sekunde 5000 Impulse an den Zähler des Steuerungs- und/oder Überwachungsgerätes übermittelt. Wird die Zeitbasis dagegen gestreckt, z.B. auf 2 Sekunden, muß der Zähler nur noch in der Lage sein, 2500 Impulse während einer Sekunde sicher voneinander zu unterscheiden; mit einer weiteren Streckung der Zeitbasis werden schließlich immer geringere Anforderungen an den Zähler gestellt, so daß die eingangs genannte Vorrichtung auch unter diesem Gesichtspunkt kostenoptimal gestaltet werden kann.

Die Streckung der Zeitbasis ist prinzipiell nur durch die jeweiligen Zeitkonstanten der überwachten Größen beschränkt. So wird man z.B. bei einer Temperaturmessung an einem Schmelzofen nur vergleichsweise langsame Temperaturänderungen erwarten, so daß eine erhebliche Streckung der Zeitbasis, der Torzeit, möglich wird. Ähnliches gilt für Näherungssensoren, mit denen beispielsweise der Abstand eines langsam fahrenden Fahrzeugs zu ortsfesten Hindernissen ermittelt wird.

Darüber hinaus ist zu berücksichtigen, daß die Störempfindlichkeit hochfrequenter Signale deutlich höher ist als diejenige niederfrequenter Signale, so daß auch durch eine Strekkung der Zeitbasis, wie oben beschrieben, das erfindungsgemäße Verfahren zum Übertragen analoger Meßwerte sicherer wird.

Der Meßwertaufnehmer weist eine Eingangskonvertierungseinrichtung, eine Ausgangskonvertierungseinrichtung und eine Übertragungseinrichtung auf, wobei die Eingangskonvertierungseinrichtung zur Konvertierung des aufgenommenen Meßwertes in einen Digitalwert, die Ausgangskonvertierungseinrichtung zur Konvertierung des Ausgangs der Eingangskonvertierungseinrichtung in eine dem Meßwert proportionale Frequenz oder Signalfolge und die Übertragungseinrichtung zur Übertragung des Ausgangs der Ausgangskonvertierungseinrichtung an das Steuerungs- und/oder Überwachungsgerät dient.

Wenn zwischen der Eingangskonvertierungseinrichtung und der Ausgangskonvertierungseinrichtung des Meßwertaufnehmers eine Recheneinrichtung vorgesehen ist, kann mittels der Recheneinrichtung, die z.B. ein Mikroprozessor oder ein anwenderspezifischer integrierter Schaltkreis (ASIC) sein kann, z.B. eine Vorverarbeitung des Meßwertes, insbesondere eine Filterung des Meßwertes, erreicht werden.

Eingangskonvertierungseinrichtung, Ausgangskonvertierungseinrichtung und Übertragungseinrichtung, ggf. auch die Recheneinrichtung, können in quasi beliebiger Kombination eine bauliche Einheit bilden. Daher sei hier lediglich exemplarisch ausgeführt, daß z.B. die Recheneinrichtung und die Ausgangskonvertierungseinrichtung, wie auch die Eingangskonvertierungseinrichtung und die Ausgangskonvertierungseinrichtung jeweils eine bauliche Einheit bilden können. Andere hier nicht explizit ausgeführte Kombinationen sind gleichfalls jederzeit denkbar.

Das Steuerungs- und/oder Überwachungsgerät weist einen Zähler zum Zählen elektrischer Impulse auf, wobei aus der Anzahl der während eines Zeitabschnittes gezählten Impulse der Meßwert ermittelbar ist.

Das Steuerungs- und/oder Überwachungsgerät übernimmt üblicherweise eine Weiterverarbeitung des Meßwertes und leitet in Abhängigkeit vom jeweiligen Meßwert bestimmte Aktionen ein. Dies kann z.B. das An- oder Abschalten von Aktoren im gesteuerten und/oder überwachten Prozeß, das Ausgeben von Alarm- oder Warnhinweisen oder das Auslösen von Alarmreaktionen sein. Um diese Aktionen durchführen zu können, wird üblicherweise im Steuerungs- und/oder Überwachungsgerät in Abhängigkeit vom aktuellen Meßwert ein Signal generiert.

Ein einfaches Beispiel für diesen Zusammenhang ist eine Übertemperaturüberwachung, bei der der analoge Meßwert ein Temperaturwert ist und wobei das Signal bei Erreichen der Übertemperatur, also z.B. einem Grenzwert von 80°C, ausgelöst wird. Da eine exakte Übereinstimmung des analogen Meßwertes mit dem vorgegebenen Grenz- oder Schwellwert einerseits aufgrund der Diskretisierung des Meßwertes, andererseits aufgrund des Abtastverhaltens sowohl des Meßwertaufnehmers als auch des Steuerungs- und/oder Überwachungsgerätes nicht garantiert werden kann, ist es gemäß der Erfindung vorgesehen, daß für das Steuerungs- und/oder Überwachungsgerät ein unterer und ein oberer Grenzwert vorgebbar und abspeicherbar ist und daß im Steuerungs- und/oder Überwachungsgerät ein Signal generierbar ist, wenn der Meßwert zwischen dem unteren Grenzwert und dem oberen Grenzwert liegt. Damit wird der oben beschriebene Grenz- oder Schwellwert zu einem Grenz- oder Schwellwertintervall, in dem das Signal auch mit einem gewissen Toleranzbereich um den Grenz- oder Schwellwert herum auslösbar ist.

Wegen zeitlich stark schwankender Meßwerte weist die Auslösung des Signals in Abhängigkeit von dem Meßwert ein Hystereseverhalten auf. Zu diesem Zweck ist das Steuerungs- und/oder Überwachungsgerät derart ausgestaltet, daß ein erster und ein zweiter Grenzwert vorgebbar und abspeicherbar ist und daß im Steuerungs- und/oder Überwachungsgerät ein Signal generierbar ist, wenn der Meßwert, ausgehend von einem Wert unterhalb des ersten Grenzwertes, den ersten Grenzwert überschritten hat und daraufhin, ausgehend von einem oberhalb des zweiten Grenzwertes, den zweiten Grenzwert noch nicht unterschritten hat.

Auf diese Weise wird das vom Steuerungs- und/oder Überwachungsgerät in Abhängigkeit vom Meßwert generierte Signal auch bei zeitlich stark schwankenden Meßwerten sicher gehalten, wenn der zweite Grenzwert soweit unterhalb des ersten Grenzwertes vorgegeben wird, daß dieser im Rahmen der normalen Schwankungen des Meßwertes nicht unterschritten wird.

Ein Ausführungsbeispiel der Erfindung wird nachstehend anhand der Zeichnungen näher erläutert. Dabei zeigen:
- FIG 1: eine bekannte Vorrichtung zum Übertragen analoger Meßwerte,
- FIG 2: die vorgeschlagene Vorrichtung zum Übertragen analoger Meßwerte,
- FIG 3 und 4: Meßwertverlauf und in Abhängigkeit vom Meßwert generiertes Signal.

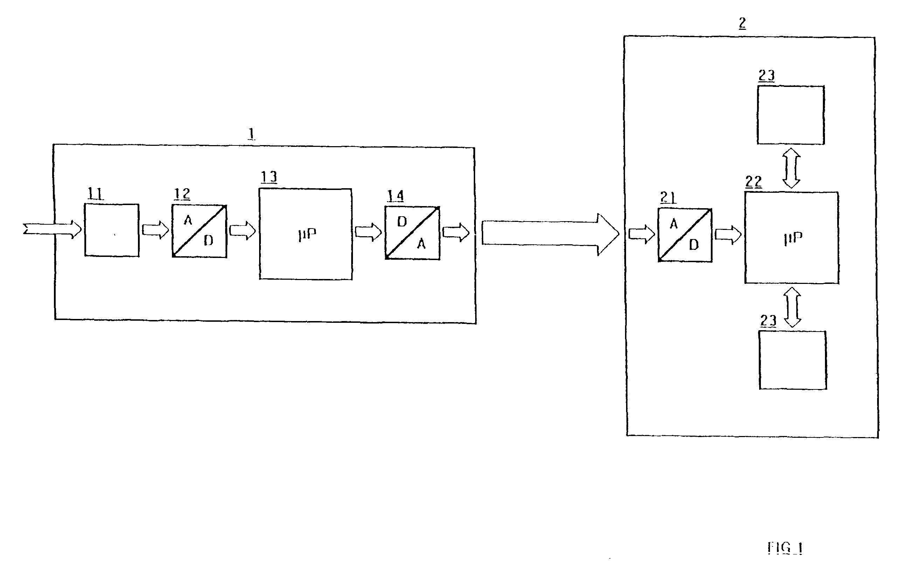

FIG 1 zeigt eine bekannte Vorrichtung zum Übertragen analoger Meßwerte. Dargestellt ist ein Meßwertaufnehmer 1 und ein weiteres elektrisches Gerät 2, das im folgenden als Steuerungs- und/oder Überwachungsgerät 2 bezeichnet wird. Wie der Pfeil zwischen dem Gerät 1 und dem Gerät 2 andeutet, sind die beiden Geräte 1, 2 kommunikativ miteinander verbindbar.

Das Gerät 1 ist ein Meßwertaufnehmer 1, der über einen Sensor 11 einen Meßwert aufnimmt und diesen in eine elektrische Größe, z.B. einen Strom- oder Spannungswert umwandelt. Diese elektrische Größe wird mit dem Analog-Digital-Wandler 12 in einen Digitalwert konvertiert, der anschließend in einer Verarbeitungseinrichtung 13, die z.B. ein Mikroprozessor 13, ein ASIC 13 oder ähnliches sein kann, verarbeitet wird.

Als Beispiel für die Verarbeitung des digitalisierten Meßwertes sei die Filterung des Meßwertes genannt. Der vorverarbeitete Meßwert wird an einen Digital-Analog-Wandler 14 ausgegeben und als Analogwert dem Steuerungs- und/oder Überwachungsgerät übermittelt. Auf der Seite des Steuerungs- und/oder Überwachungsgerätes 2 wird der übermittelte Analogwert von einem Analog-Digitalwandler 21 erneut in einen Digitalwert konvertiert und dort in einer weiteren Verarbeitungseinheit 22, die wiederum ein Mikroprozessor 22 oder ein ASIC 22 oder ähnliches sein kann, verarbeitet.

Im Steuerungs- und/oder Überwachungsgerät 2 bezieht sich die Verarbeitung des Meßwertes durch die Verarbeitungseinrichtung 22 üblicherweise auf die Generierung eines Signals in Abhängigkeit von einem bestimmten Wert des Meßwertes. Das in Abhängigkeit vom Meßwert generierte Signal kann z.B. dazu dienen, in weiteren Einheiten 23 des Steuerungs- und/oder Überwachungsgerätes 2 einen Schaltvorgang auszulösen. Die weiteren Einheiten 23 des Steuerungs- und/oder Überwachungsgerätes 2 können z.B. Ausgabeeinheiten 23 oder Ein-/Ausgabeeinheiten 23 des Steuerungs- und/oder Überwachungsgerätes 2 sein.

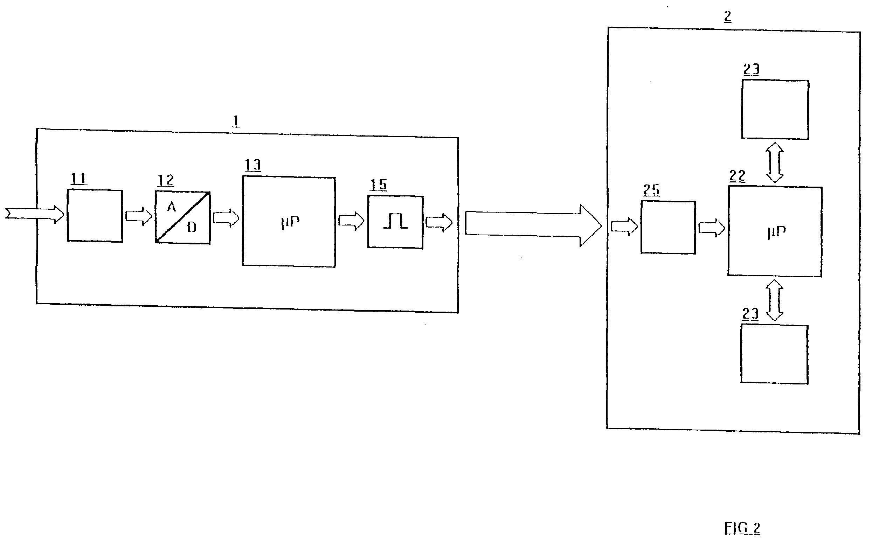

FIG 2 zeigt die vorgeschlagene Vorrichtung zum Übertragen analoger Meßwerte. Genau wie in FIG 1 ist zunächst ein Meßwertaufnehmer 1 und ein elektrisches Gerät 2 dargestellt. Erneut sind Meßwertaufnehmer 1 und elektrisches Gerät 2 kommunikativ miteinander verbindbar, wie durch den Pfeil zwischen den beiden Geräten 1, 2 angedeutet.

Der Meßwertaufnehmer 1 weist wiederum einen Sensor 11 zum Aufnehmen des Meßwertes und zum Erzeugen einer dem Meßwert proportionalen elektrischen Größe auf. Diese elektrische Größe wird im Analog-Digital-Wandler 12 in einen Digitalwert umgewandelt und einer Verarbeitungseinrichtung 13 zugeleitet. Die Verarbeitungseinrichtung 13 kann, wie bereits bei FIG 1 erwähnt, ein Mikroprozessor 13, ein ASIC 13 oder ähnliches sein.

Der jetzt im Bereich der Verarbeitungseinrichtung 13 vorliegende, digitalisierte Meßwert wird einer Ausgangskonvertierungseinrichtung 15 zugeleitet, die den digitalisierten Meßwert in eine dem Meßwert proportionale Frequenz oder Signalfolge konvertiert. Diese Frequenz oder Signalfolge wird dem Zähler 25 des Steuerungs- und/oder Überwachungsgerätes 2 zugeleitet. Der Zähler 25 zählt die elektrischen Impulse der von der Ausgangskonvertierungseinrichtung 15 ausgegebenen Frequenz oder Signalfolge. Die Anzahl der während eines Zeitabschnittes gezählten Impulse wird der Verarbeitungseinrichtung 22 des Steuerungs- und/oder Überwachungsgerätes 2 übermittelt.

Mittels der Verarbeitungseinrichtung 22, die wie bereits bei FIG 1 ausgesagt, z.B. ein Mikroprozessor 22 oder ein ASIC 22 sein kann, ist aus der Anzahl der während eines Zeitabschnittes gezählten Impulse der Meßwert ermittelbar. Erneut kann, wie bereits bei FIG 1 beschrieben, in Abhängigkeit von dem Meßwert ein Signal generiert werden und z.B. unter Ausnutzung der weiteren Einheiten 23, wie ebenfalls bereits bei FIG 1 beschrieben, zur Beeinflussung eines zu steuernden und/oder zu überwachenden Prozesses genutzt werden.

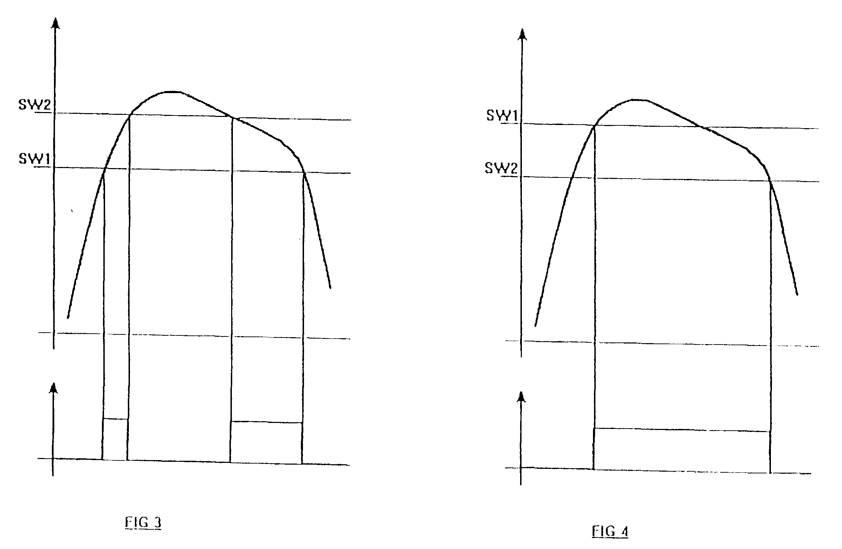

Die Generierung eines Signals in Abhängigkeit vom Meßwert wird anhand der Figuren 3 und 4 näher erläutert. Zunächst sind im Steuerungs- und/oder Überwachungsgerät zwei Grenzwerte SW1, SW2 vorgebbar und abspeicherbar.

Gemäß der Erfindung ist es dabei vorgesehen, daß die beiden Grenzwerte SW1, SW2 einen unteren SW1 und einen oberen Grenzwert SW2 bilden.

In FIG 3 ist im oberen Koordinatensystem der Graph des Meßwertes über der Zeit abgetragen und zusätzlich auf der Abszisse der untere Grenzwert SW1 und der obere Grenzwert SW2 abgetragen. Im unteren Koordinatensystem von FIG 3 erkennt man, daß jeweils dann ein Signal generiert wird, wenn der Meßwert den unteren Grenzwert SW1 überschritten, aber den oberen Grenzwert SW2 noch nicht überschritten hat; das Signal wird also immer dann generiert, wenn der Meßwert zwischen dem unteren Grenzwert SW1 und dem oberen Grenzwert SW2 liegt.

Die Generierung eines Signals in Abhängigkeit vom Meßwert ist außenden in FIG 4 dargestellt. Dabei ist vorgesehen, daß ein erster und ein zweiter Grenzwert SW1, SW2 vorgebbar und abspeicherbar sind. Diese beiden Grenzwerte sind erneut im oberen Koordinatensystem von FIG 4 auf der Abszisse abgetragen. Im unteren Koordinatensystem von FIG 4 erkennt man, daß ein Signal immer dann generiert wird, wenn der Meßwert, ausgehend von einem Wert unterhalb des ersten Grenzwertes SW1, den ersten Grenzwert SW1 überschritten hat und daraufhin ausgehend oberhalb des zweiten Grenzwertes SW2 den zweiten Grenzwert SW2 noch nicht unterschritten hat. Die Generierung des Signals in Abhängigkeit vom Meßwert weist damit Hysterese-Eigenschaften auf.

Einer der Vorteile der vorliegenden Erfindung besteht darin, daß im wesentlichen bekannte Komponenten in bisher nicht genutzter Zusammenstellung verwendet werden, so daß insbesondere für den Endnutzer des erfindungsgemäßen Verfahrens keine neuen Geräte oder Vorrichtungen zu beschaffen sind, denn die heute am Markt befindlichen speicherprogrammierbaren Steuerungen weisen stets einen Zähler auf, der im Rahmen des erfindungsgemäßen Verfahrens Verwendung finden kann.

Darüber hinaus werden die Geräte in ihrer Struktur vereinfacht, was durch den Fortfall von nicht mehr benötigten Funktionsgruppen zu einem erheblichen Preisvorteil nicht nur auf der Seite des Meßwertaufnehmers, bei dem zumindest ein Digital-/Analogwandler entfällt, sondern auch auf der Seite des den Meßwert aufnehmenden oder verarbeitenden Gerätes, bei dem zumindest ein Analog-/Digitalwandler, häufig sogar eine komplette Analogeingabebaugruppe, entfällt.

Zusammenfassend kann die vorliegende Erfindung wie folgt kurz beschrieben werden: Ein bekanntes Verfahren zur Übertragung analoger Meßwerte zwischen einem Meßwertaufnehmer und einem meßwertverarbeitenden Gerät wird dadurch verbessert, daß auf die mehrfache A/D, D/A-Konvertierung des Meßwertes, die zur Analogübertragung des Meßwertes erforderlich ist, verzichtet wird, und statt dessen auf der Seite des Meßwertaufnehmers der Meßwert zur Übertragung in eine dem Meßwert proportionale Frequenz oder Signalfolge konvertiert wird, die auf der Seite des meßwertverarbeitenden Gerätes einem Zähler zugeleitet wird, so daß aus der Anzahl der gezählten Impulse der Meßwert ermittelbar ist.

Die Erfindung löst damit das technische Problem einer kostengünstigen und störsicheren Übertragung analoger Meßgrößen vom Sensor (z.B. BERO, induktiv oder sonar) zur weiterverarbeitenden Baugruppe (z.B. speicherprogrammierbare Steuerung bzw. deren zugehörige Peripheriebaugruppe).

Bisher wurde das Problem so gelöst, daß auf seiten des Sensors die Umwandlung der analogen Meßgröße (z.B. Abstand in cm bei BEROS) in eine proportionale Spannung (0 ... 10 V) oder Strom (4 bis 20 mA) erfolgte, so daß eine Nutzung der in der Automatisierungstechnik standardisierten Strom-/ Spannungsschnittstellen ermöglicht wird bzw. auf der Steuerungsseite die heute standardmäßig verfügbaren Ein-/Ausgabebaugruppen mit den in der Automatisierungstechnik standardisierten Strom-/Spannungsschnittstellen (0 ... 10 V, 4 bis 20 mA, -20 bis +20mA) verwendet werden.

Dieses technische Problem wird durch die Übertragung einer dem analogen Meßwert proportionalen Frequenz und deren Weiterverarbeitung anstelle der heute üblichen Übertragung einer analogen Spannung eines analogen Stromes gelöst. Damit ergeben sich insbesondere die Vorteile geringerer Kosten und einer höheren Störsicherheit. Intelligente Sensoren benutzen in der Regel einen Mikrocontroller zur Meßwertverarbeitung bzw. Meßwertaufbereitung, d.h. der Meßwert liegt in digitaler Form vor. Durch einen nachgeschalteten Digital/Analogwandler erfolgt die Umsetzung in ein proportionales Spannungs-/ Stromsignal, das anschließend übertragen wird. Bei einer Umsetzung in eine der Meßgröße proportionale Frequenz, die vom Mikrocontroller direkt erzeugt wird, kann die nachgeschaltete D/A-Umwandlung entfallen, wodurch eine erhebliche Kosteneinsparung beim Sensor erzielt wird. Auf der Steuerungsseite (SPS) wird ebenfalls eine erhebliche Kosteneinsparung erzielt, da auf den Einsatz kostenintensiver Analogbaugruppen verzichtet werden kann, weil aufgrund der geringen Anforderungen an die Frequenzübertragung diese mit digitalen Standard I/O-Baugruppen bzw. speicherprogrammierbaren Steuerungen mit Zähler-Eingängen und entsprechender Auswerte-Software realisiert werden kann.

Daneben ist aus der Literatur und Praxis hinlänglich bekannt, daß die Übertragung einer Frequenz wesentlich unempfindlicher gegenüber EMV-Einflüssen ist als die Übertragung eines analogen Spannungswertes, so daß mit der vorliegenden Erfindung auch eine deutlich erhöhte Störsicherheit bei der Signalübertragung erreicht wird.

## Patentansprüche

1. Steuerungs- und/oder Überwachungsgerät (2),
- das mit einem Meßwertaufnehmer (1) zum Aufnehmen mindestens eines analogen Meßwertes, der
-- eine Eingangskonvertierungseinrichtung (12) zur Konvertierung des Meßwertes in einen Digitalwert,
-- eine Ausgangskonvertierungseinrichtung (15) zur Konvertierung des Ausgangs der Eingangskonvertierungseinrichtung (12) in eine dem Meßwert proportionale Frequenz oder Signalfolge und
-- eine Übertragungseinrichtung zur Übertragung des Ausgangs der Ausgangskonvertierungseinrichtung (15) an das Steuerungs- und/oder Überwachungsgerät (2)
aufweist, kommunikativ verbindbar ist,
- so daß der mittels des Meßwertaufnehmers (1) aufnehmbare Meßwert an das Steuerungs- und/ oder Überwachungsgerät (2) übermittelbar ist und
- wobei ein Zähler (25) zum Zählen elektrischer Impulse vorgesehen ist, so daß aus der Anzahl der während eines Zeitabschnittes gezählten Impulse der von der Ausgangskonvertierungseinrichtung (15) ausgegebenen Frequenz oder Signalfolge der Meßwert ermittelbar ist,
wobei
ein erster und ein zweiter Grenzwert (SW1, SW2) vorgebbar und abspeicherbar ist und
ein Signal generierbar ist, wenn der Meßwert, ausgehend von einem Wert unterhalb des ersten Grenzwertes (SW1), den ersten Grenzwert (SW1) überschritten hat und daraufhin, ausgehend von einem Wert oberhalb des zweiten Grenzwertes (SW2), den zweiten Grenzwert (SW2) noch nicht unterschritten hat.

## Claims

1. A control and/or monitoring instrument (2)
- which is capable of being connected in communicative manner to a measured-value pick-up (1) for registering at least one analogue measured value, which comprises
-- an input conversion device (12) for converting the measured value into a digital value,
-- an output conversion device (15) for converting the output of the input conversion device (12) into a frequency or signal-sequence proportional to the measured value and
-- a transmission device for transmitting the output of the output conversion device (15) to the control and/or monitoring instrument (2)
- so that the measured value that is capable of being registered by means of the measured-value pick-up (1) can be communicated to the control and/or monitoring instrument (2) and
- whereby a counter (25) for counting electrical impulses is provided, so that the measured value can be ascertained from the number of impulses of the frequency or signal-sequence output by the output conversion device (15) that are counted during a time-slot,
wherein a first and a second limiting value (SW1, SW2) can be predetermined and stored and
a signal can be generated if the measured value, starting from a value below the first limiting value (SW1), has exceeded the first limiting value (SW1) and
thereupon, starting from a value above the second limiting value (SW2), has not yet fallen below the second limiting value (SW2).

## Revendications

1. Appareil (2) de commande et/ou de surveillance,
- qui peut être mis en communication avec un récepteur (1) de valeurs de mesure pour recevoir au moins une valeur de mesure analogique, qui
-- comporte un dispositif (12) de conversion d'entrée pour convertir la valeur de mesure en une valeur numérique,
-- un dispositif (15) de conversion de sortie pour convertir la sortie du dispositif (12) de conversion d'entrée en une fréquence ou une séquence de signaux proportionnelle à la valeur de mesure et
-- un dispositif de transmission pour transmettre la sortie du dispositif (15) de conversion de sortie à l'appareil (2) de commande et/ou de surveillance,
- si bien que la valeur de mesure pouvant être reçue au moyen du récepteur (1) de mesures peut être transmise à l'appareil (2) de commande et/ou de surveillance, et
- un compteur (25) pour compter des impulsions électriques étant prévu, si bien que la valeur de mesure peut être déterminée à partir du nombre des impulsions comptées pendant une tranche de temps de la fréquence ou de la séquence de signaux émise par le dispositif (15) de conversion de sortie,
- une première valeur (SW1) limite et une deuxième valeur (SW2) limite pouvant être prescrites et mises en mémoire et
- un signal pouvant être généré si la valeur de mesure est supérieure, à partir d'une valeur inférieure à la première valeur (SW1) limite, à la première valeur (SW1) limite et n'est pas encore ensuite, à partir d'une valeur supérieure à la deuxième valeur (SW2) limite, inférieure à la deuxième valeur (SW2) limite.
